**Europäisches Patentamt**

**European Patent Office**

**Office européen des brevets**

(19)

(11) Veröffentlichungsnummer: **0 071 751 B1**

(12) **EUROPÄISCHE PATENTSCHRIFT**

(45) Veröffentlichungstag der Patentschrift: 03.06.87

(51) Int. Cl.⁴: **C 08 G 69/16, C 02 F 1/24**

(21) Anmeldenummer: **82105807.0**

(22) Anmeldetag: **30.06.82**

(54) Verfahren zum Entfernen von Caprolactam und dessen Oligomeren aus solches enthaltendem Kühlwasser.

(30) Priorität: **08.07.81 DE 3126835**

(43) Veröffentlichungstag der Anmeldung:
**16.02.83 Patentblatt 83/7**

(45) Bekanntmachung des Hinweises auf die Patenterteilung:
**03.06.87 Patentblatt 87/23**

(84) Benannte Vertragsstaaten:
**BE CH DE GB IT LI NL**

(56) Entgegenhaltungen:
**EP - A - 0 005 827**
**DE - A - 2 233 377**

**PROCEEDINGS OF THE 2ND NATIONAL CONFERENCE ON COMPLETE WATER REUSE, 1976, Seiten 358-278, New York, US; L.J. THIBODEAUX: "Air stripping of organics from wastewater. A compendium"**

(73) Patentinhaber: **BASF Aktiengesellschaft, Carl-Bosch-Strasse 38, D-6700 Ludwigshafen (DE)**

(72) Erfinder: **Strehler, Hugo, Dr., Carostrasse 12, D-6710 Frankenthal (DE)**
Erfinder: **Kegel, Robert, Kalmitstrasse 15, D-6710 Frankenthal (DE)**
Erfinder: **Valentin, Guenter, Pfarrer-Friedrich-Strasse 43, D-6700 Ludwigshafen (DE)**
Erfinder: **Hoerauf, Werner, Dr., Homburger Strasse 10, D-6700 Ludwigshafen (DE)**

ACTORUM AG

## Beschreibung

Bei der Herstellung von Polycaprolactam durch Polymerisation von Caprolactam wird das schmelzflüssige Polycaprolactam in Stränge gegossen und diese zum Abkühlen durch ein Wasserbad geleitet. Da Polycaprolactam von der Herstellung ca. 10 Gew.% Monomere enthält, wird beim Leiten der Polycaprolactamstränge durch das Kühlwasser fortlaufend monomeres und oligomeres Caprolactam ausgewaschen. Hierdurch reichern sich die Verbindungen im Kühlwasser an und führen zu vermehrtem Wachstum von Algen. Es bildet sich im Kühlwasser dann eine schleimige Masse, die das erzeugte Polycaprolactam verunreinigt.

Es sind zwar schon allgemeine Arbeitsweisen zum Verhindern von Algenwachstum in Wasser bekannt. So kennt man den Zusatz von kolloidalem Silber. Dies ist jedoch sehr aufwendig. Ein geeignetes Mittel ist auch Ozonisieren von Wasser oder der Zusatz von Formaldehyd. Hierdurch ist jedoch eine Schädigung des sehr empfindlichen Polyamids zu befürchten.

Aus der EP-Anmeldung 0 013 465 ist ein Verfahren bekannt, bei dem man aus Wasser darin unlösliche feste oder flüssige Bestandteile durch Flotation mit Gasen gegebenenfalls unter Zusatz von Flotationshilfsmitteln solche festen oder flüssigen Bestandteile abtrennt. Es wird kein Hinweis gegeben, wie in Wasser lösliches Caprolactam und dessen lösliche Oligomere aus Wasser abgetrennt werden sollen.

Es war deshalb die technische Aufgabe gestellt, den Gehalt an Caprolactam und dessen Oligomeren im Kühlwasser möglichst niedrig zu halten, um die Schleimbildung und eine Trübung des Kühlwassers zu verhindern.

Diese Aufgabe wird gelöst, in einem Verfahren zum Entfernen von Caprolactam und dessen Oligomeren aus solches enthaltendem Kühlwasser, wobei man in das Kühlwasser Gase einbringt und den sich bildenden Schaum vom Kühlwasser abtrennt.

Das neue Verfahren hat den Vorteil, dass das Kühlwasser völlig klar bleibt. Dann hat das neue Verfahren den Vorteil, dass der Gehalt an Caprolactam und dessen Oligomeren auf einfache Weise minimiert wird. Schliesslich hat das neue Verfahren den Vorteil, dass keine Fremdstoffe zugesetzt werden müssen, die einen nachteiligen Einfluss auf das Polycaprolactam haben.

Der Erfindung liegt die überraschende Beobachtung zugrunde, dass der sich aus dem Kühlwasser bildende Schaum ca. 20 Gew.% mehr Caprolactam und Oligomere enthält als das Kühlwasser.

Behandlungsbedürftige Kühlwässer, die Caprolactam und dessen Oligomere enthalten, erhält man beispielsweise bei der Herstellung von Polycaprolactam, wobei man die Polycaprolactamschmelze durch eine Düsenplatte in Stränge giesst und diese zum Zwecke der Abkühlung durch ein Wasserbad leitet. Aus den erstarrenden Polycaprolactamsträngen, die von der Herstellung noch etwa 10 Gew.% Monomere und Oligomere enthalten, wird durch das Kühlwasser ein geringer Teil der Monomeren und Oligomeren extrahiert. Um eine gleichmässige Temperatur des Kühlwassers z.B. von 20 bis 30°C einzuhalten, wird das Kühlwasser vorteilhaft im Kreis über einen Wärmetauscher gepumpt und wieder zurückgeführt. Durch den fortlaufenden Betrieb reichern sich Caprolactam und dessen Oligomere im Kühlwasser an.

Erfindungsgemäss bringt man in das behandlungsbedürftige Kühlwasser Gase ein. Geeignete Gase sind beispielsweise Luft, Stickstoff oder Kohlendioxid. Im Hinblick auf die leichte Zugänglichkeit und Umweltfreundlichkeit wird Luft bevorzugt. Je m³ behandlungsbedürftiges Kühlwasser wendet man stündlich vorteilhaft 4 bis 8 m³ Gas an. Das Einbringen von Gas in die Kühlflüssigkeit kann mittels Düsen, Fritten, Strahlern oder anderen, nach dem Stand der Technik bekannten, Vorrichtungen zum Beaufschlagen von Flüssigkeiten mit Gas erfolgen. In der Regel reicht bereits die über einen Überlauf im Kühlbad mitgerissene Luft aus, um den nötigen Schaum zu erzeugen.

Die Ausbildung eines Schaumes erfolgt zweckmässig in einem gesonderten Behälter. Die Schaumbildung erfolgt dort durch Austreten des eingetragenen Gases aus der Kühlflüssigkeit. Die Schaumschicht enthält etwa 20% mehr Caprolactam und Oligomere als das Kühlwasser. Der erzeugte Schaum wird zweckmässig fortlaufend entfernt, z.B. durch Dekantieren oder Absaugen. Das so behandelte Kühlwasser wird wieder zum Kühlen der Polycaprolactamstränge verwendet.

Nach der erfindungsgemässen Arbeitsweise stellt sich beispielsweise ein Gehalt von 0,038 Gew.% Stickstoff in Form von Caprolactam und dessen Oligomeren im Kühlwasser ein. Das Kühlwasser ist frei von Trübung und schleimigen Bestandteilen.

Das Verfahren nach der Erfindung sei an folgendem Beispiel veranschaulicht.

Beispiel

Durch eine Wanne von 9 m Länge, 0,5 m Breite und 0,5 m Höhe, die mit 2 m³ Kühlwasser von 25°C gefüllt ist, leitet man stündlich 0,4 t Polycaprolactam, das in Form von Strängen schmelzflüssig eingetragen wird und die während das Passierens durch das Kühlbad erstarren. In der Wanne befindet sich ein rohrförmiger Überlauf, durch den fortlaufend Wasser ausgetragen wird, wobei zugleich je m³ Kühlwasser 6 m³ Luft mit angesaugt wird. Das ausgetragene Kühlwasser wird in eine Beruhigungswanne, die mit einem Wehr ausgestattet ist, geleitet, und anschliessend durch einen Kühler gepumpt. In der Beruhigungswanne trennt sich die mitangesaugte Luft vom Kühlwasser und bildet eine Schaumschicht. Die Schaumschicht wird durch das Wehr vom Kühlwasser abdekantiert und entsorgt, während das so gereinigte Kühlwasser wieder in die Wanne zum Kühlen der Polycaprolactamstränge zurückgeleitet wird. Der gesamte Kreislauf enthält 100 m³ Kühlwasser. Stündlich werden 170 m³ Kühlwasser im Kreis gefördert. Bei einem Betrieb von 26 Monaten übersteigt der Gehalt an Extrakt im Kühlwasser nicht 0,04 Gew.% N in Form von Caprolactam und dessen Oligomeren. Das Kühlwasser bleibt klar. Eine Schleimbildung tritt nicht ein.

**Patentansprüche**

1. Verfahren zur Entfernung von Caprolactam und dessen Oligomeren aus solches enthaltendem Kühlwasser, dadurch gekennzeichnet, dass man in das Kühlwasser Gase einbringt und den sich bildenden Schaum vom Kühlwasser abtrennt.

2. Verfahren nach Anspruch 1, dadurch gekennzeichnet, dass man je m³ Kühlwasser und Stunde 4 bis 8 m³ Gase einbringt.

3. Verfahren nach den Ansprüchen 1 und 2, dadurch gekennzeichnet, dass man Luft verwendet.

**Claims**

1. A process for removing caprolactam and its oligomers from cooling water containing these compounds, wherein gases are introduced into the cooling water and the foam which forms is separated off.

2. A process as claimed in claim 1, wherein from 4 to 8 m³ of gases are introduced per m³ of cooling water per hour.

3. A process as claimed in claims 1 and 2, wherein air is used.

**Revendications**

1. Procédé pour l'élimination de la caprolactame et de ses oligomères d'eaux de refroidissement qui en contiennent, caractérisé en ce que l'on introduit dans l'eau de refroidissement un produit gazeux, puis on sépare la mousse formée de l'eau de refroidissement.

2. Procédé suivant la revendication 1, caractérisé en ce que l'on introduit par m³ d'eau de refroidissement et par heure entre 4 et 8 m³ de produit gazeux.

3. Procédé suivant les revendications 1 et 2, caractérisé en ce que l'on emploie de l'air.